## Europäisches Patentamt
## European Patent Office
## Office européen des brevets

(11) Numéro de publication: **0 234 160**
**B1**

(12) # FASCICULE DE BREVET EUROPÉEN

(45) Date de publication du fascicule du brevet:
14.12.88

(51) Int. Cl.⁴: **B 60 N 1/06,** F 16 B 2/18

(21) Numéro de dépôt: **86402944.2**

(22) Date de dépôt: **26.12.86**

(54) Vérin rectiligne à blocage par galets en position indifférente.

(30) Priorité: **30.12.85 FR 8519419**

(43) Date de publication de la demande:
**02.09.87 Bulletin 87/36**

(45) Mention de la délivrance du brevet:
**14.12.88 Bulletin 88/50**

(84) Etats contractants désignés:
**AT BE CH DE ES GB GR IT LI LU NL SE**

(56) Documents cité:
**AT-B-297 558**
**FR-A-2 547 078**
**FR-A-2 574 721**

(73) Titulaire: **A & M COUSIN ETABLISSEMENTS
COUSIN FRERES, Le Bois de Flers, F-61103 Flers
Cédex (FR)**

(72) Inventeur: **Pipon, Yves, La Garenne St. Georges
des Groseilliers, F-61100 Flers (FR)**
Inventeur: **Droulon, Georges, 16 rue de la Garenne
St. Georges des Groseilliers, F-61100 Flers (FR)**

(74) Mandataire: **Madeuf, Claude Alexandre Jean,
CABINET MADEUF 3, avenue Bugeaud, F-75116
Paris (FR)**

## Description

La présente invention a pour objet un vérin rectiligne à blocage par galets en position indifférente, c'est-à-dire que la tige de vérin peut être bloquée dans toutes les positions entre un point minimum et un point maximum, constitué par une cage défissant à sa partie supérieure une chambre intérieure tandis que sa partie inférieure est aménée pour former une patte de fixation.

On connaît déjà des vérins à mécanismes divers utilisés comme petits mécanismes sur les sièges, en particulier les sièges de véhicules automobiles, afin de permettre, par déplacement de la tige de vérin, le débattement du dossier du siège, le réglage en hauteur de l'assise du siège et, même pour certains, l'emploi de cette tige de vérin comme glissière de siège pour régler la position de ce siège horizontalement.

Leur emploi, qui s'est généralisé dans ces dernières années, est cependant limité du fait que, quel que soit leur mode de fonctionnement hydraulique, à blocage par coincement d'anneaux ou l'emploi d'une vis sans fin bloquée ou d'une vis-écrou, tous ces principes sont onéreux de par la qualité nécessaire à la réalisation de leur composant.

La présente invention de conception simple d'un ensemble de pièces peu précises forme un vérin rectiligne à blocage par galets en position indifférente entre un point minimum et un point maximum dont soit la tige de vérin est mobile et de dispositif de blocage fixe soit le dispositif de blocage est mobile, la tige de vérin étant alors fixe.

Conformément à l'invention, la cage de vérin de blocage par galets présente, à sa partie supérieure, une forme sensiblement en losange renfermant une came présentant deux becs disposés sensiblement à 120° l'un de l'autre, cette came permettant de déplacer deux pièces en forme de chapeau de gendarme prenant appui, sur leur côté opposé aux becs de la came, sur les parois intérieures inclinées du losange de la chambre tandis que leur partie inférieure en V contient des trains de galets maintenus en contact avec les pièces par un ressort, les trains de galets reposant sur la partie supérieure d'une tige de vérin présentant au moins une tête de raccordement.

Suivant une autre caractéristique de l'invention, la tige de vérin est à section carrée et repose dans la partie inférieure de la chambre par son côté inférieur tandis que son côté supérieur supporte les trains de galets.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une élévation de face, partie en coupe, du vérin rectiligne de l'invention.

La fig. 2 est une coupe suivant la ligne II - II de la fig 1.

La fig. 3 est une vue partielle montrant l'une des extrémités de la tige de vérin.

La fig. 4 est une élévation de face, partie en coupe, du vérin rectiligne disposé verticalement de façon à éliminer le ressort agissant sur les galets et rampes.

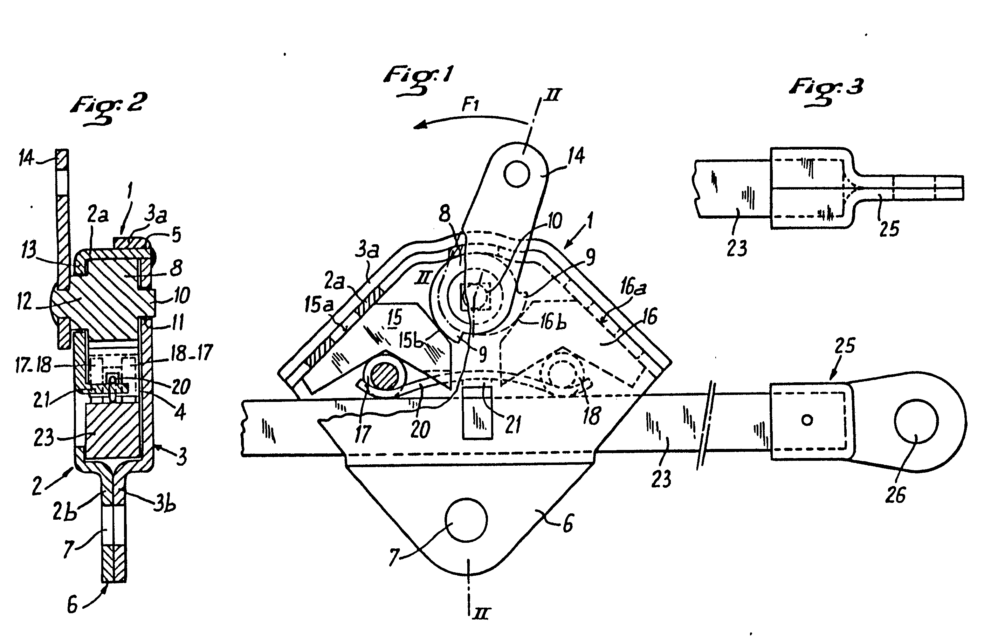

A la fig. 1, on a représenté une cage 1, sensiblement en forme de losange, constituée par deux coquilles 2, 3 qui ménagent, entre elles, une chambre 4. La partie supérieure de la coquille 2 est repliée à angle droit en 2a de façon que la partie périphérique de ce repli 2a pénètre dans des ouvertures 5 de la coquille 3 dont le bord supérieur 3a est serti sur le dessus 2a de la coquille 2.

La partie inférieure 2b - 3b des coquilles 2 et 3 est emboutie de façon à former une patte terminale 6 percée d'un trou 7 permettant ainsi la fixation de la cage 1 sur un support.

La chambre 4 contient, à sa partie supérieure, une came 8 présentant deux becs 9 disposés sensiblement à 120° l'un de l'autre, cette came présentant, sur le côté de la coquille 3, un prolongement 10 formant axe de pivotement de la came. Ce prolongement 10 repose dans un trou 11 percé dans la paroi supérieure de la coquille 3. L'autre côté de la came comporte un prolongement 12 également cylindrique formant axe de rotation et reposant dans un trou 13 percé dans la partie supérieure de la coquille 2.

Finalement, le prolongement 12 maintient, par un moyen quelconque, en général par rivetage, un levier 14 dont le rôle sera expliqué plus loin.

Les becs 9 de la came 8 reposent sur deux pièces 15, 16, de forme trapézoïdale (forme dite en chapeau de gendarme) à leur partie supérieure, de façon qu'une de leurs faces 15a, 16a prenne appui sous la coquille 2 et une autre de leurs faces 15b,16b contre les becs 9 de la came 8. La partie inférieure des pièces 15, 16 est découpée en V pour recevoir des trains de galets 17, 18 dont une partie de la périphérie est appliquée en permanence dans le fond du V des pièces 15, 16 par un ressort 20 maintenu à sa partie centrale par une patte 21 obtenue par un crevé replié à un angle de la paroi médiane de la coquille 2 (voir fig. 2). La partie inférieure des trains de galets 17, 18 repose sur l'un des côtés d'une tige de vérin 23.

Ainsi, le ressort 20 arqué maintient fixement, par ses extrémités, les trains de galets 17, 18 dans le fond du V des pièces 15, 16 coopérant avec les becs 9 de la came 8. La tige de vérin 23 qui est ici à section carrée est logée et guidée à la partie inférieure de la chambre 4 et peut donc se déplacer par rapport à la cage 1 ou au contraire être fixée entre deux éléments mais alors la cage 1 peut se déplacer par rapport à la tige 23. Les extrémités de la tige 23 portent l'une ou l'autre ou les deux à la fois des têtes de raccordement 25 (voir fig. 1 et 3), têtes percées d'un trou 26 permettant de relier la tige de vérin 23 soit à un point fixe, dans le cas où la tige 23 est fixe, soit à un point mobile, dans le cas où la cage 1 est maintenue sur un point fixe par l'intermédiaire du trou 7 de la patte terminale 6.

Lorsque l'on examine avec attention la fig. 1, on s'aperçoit que la position des becs 9 de la came 8, en repoussant les pièces 15, 16 sur les trains des galets 17, 18, assure le blocage de la cage 1 sur la tige de vérin 23 et, dans le cas où le levier 14 est tiré en permanence, dans le sens contraire à la flèche F$_1$, par un organe élastique tel qu'un ressort, ce blocage est maintenu aussi longtemps qu'un effort n'est pas exercé à l'encontre du ressort pour faire pivoter le levier 14 dans le sens de la flèche F$_1$ afin de débloquer par rotation les becs 9 de la came 8. Les pièces 15, 16 n'étant plus maintenues se déplacent l'une vers l'autre parallèlement aux parois internes du boîtier 1 sous l'action du ressort 20 maintenu par une patte 21 constituée par un crevé de la coquille 2, ce qui provoque la libération de la pression exercée par les trains de galets 17, 18 sur la tige de vérin 23.

Ainsi, à ce moment, la cage 1 et la tige de vérin 23 sont libres par rapport l'une à l'autre et, suivant les cas, on peut déplacer aisément soit la tige 23, soit la cage 1 en faisant ainsi se mouvoir un siège de la façon suivante:

a) réglage en longueur du siège
b) commande d'un organe de rehaussement de l'assise du siège,
c) commande de l'inclinaison du dossier du siège.

Lorsque l'on a trouvé la position recherchée, il suffit de relâcher la force s'exerçant dans le sens de la flèche F$_1$ pour que, automatiquement, sous l'action du ressort comme cela a été dit précédemment, l'ensemble des pièces de vérin rectiligne à blocage par galets en position indifférente reprenne la position représentée à la fig. 1, en maintenant fermement la cage 1 sur la tige 23.

Dans ce qui précède, le levier 14 est commandé manuellement mais on peut également prévoir un moteur. Il est à noter également que, pour augmenter la rapidité du recul des galets 17, 18 et éviter que ceux-ci continuent à rester en contact avec la tige 23, la valeur de l'angle au sommet des rampes en V contenant les trains de galets des pièces 15, 16, est supérieure à l'angle au sommet des rampes d'appui 15a, 16a desdites pièces 15, 16 contre les parois internes de la cage 1.

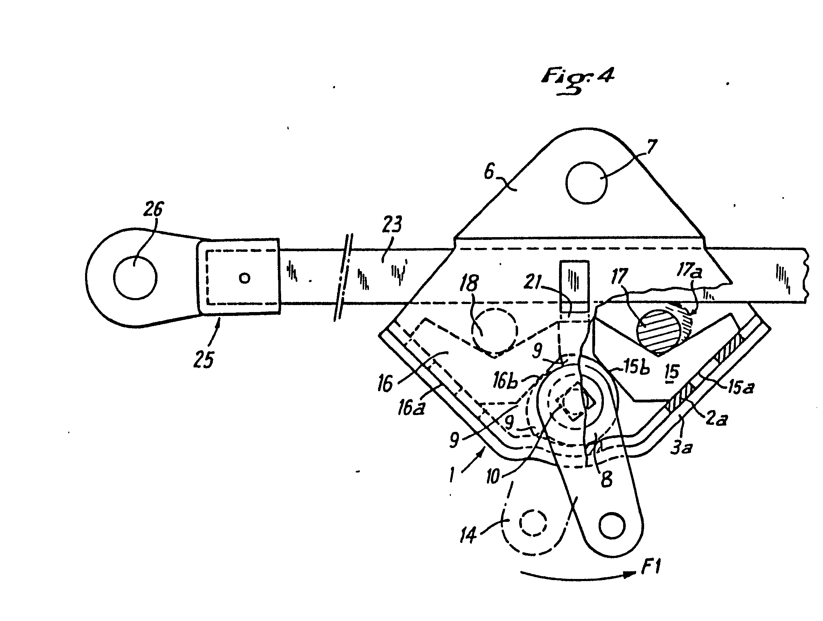

La fig. 4 représente le vérin disposé de façon à éliminer le ressort de maintien des galets et de poussée des rampes, il faut noter de plus que ce dispositif permet, lorsque le recul des galets 17, 18 est autorisé par une action volontaire ou non sur le levier de commande 14, que les galets 17, 18 sous l'action de leur inertie lors d'un choc se produisant au moment même où ces galets sont dégagés de la tige du vérin, montent sur les rampes 15, 16 tel que représenté par l'un des galets en position 17a et bloquent la tige 23 du vérin pour empêcher tout déplacement d'un point des fixations l'un par rapport à l'autre produisant, de ce fait, une grande sécurité du dispositif.

Cette sécurité est obtenue dans les deux sens de par la montée des galets sur les rampes suivant que leur inertie est dirigée par un choc avant ou arrière sur le véhicule et que ce soit le boîtier ou la tige du vérin qui soit solidaire de la partie liée au véhicule. Il est entendu que le déplacement des galets correspond à la course continue dans l'espace sous l'effet d'inertie des éléments qui ne sont pas liés à la base inerte arrêtée par le choc sur le véhicule.

**Revendications**

1. Vérin rectiligne à blocage par galets (17, 18) en position indifférente, constitué par une cage (1) définissant à sa partie supérieure une chambre intérieure (4) tandis que sa partie inférieure est amincie pour former une patte terminale (6) percée d'un trou (7) permettant la fixation de la cage (1), caractérisé en ce que la cage (1) présente, à sa partie supérieure, une forme sensiblement en losange renfermant une came (8) présentant deux becs (9) disposés sensiblement à 120° l'un de l'autre, cette came permettant de déplacer deux pièces (15, 16) en forme de chapeau de gendarme prenant appui, sur leur côté opposé aux becs (9) de la came (8), sur les parois intérieures inclinées du losange de la chambre (4) tandis que leur partie inférieure en V contient des trains de galets (17, 18) maintenus en contact avec les pièces (15, 16) par un ressort (20), les trains de galets (17, 18) reposant sur la partie supérieure d'une tige de vérin (23) présentant au moins une tête de raccordement (25).

2. Vérin suivant la revendication 1, caractérisé en ce que la tige de vérin (23) est à section carrée et repose dans la partie inférieure de la chambre (4) par son côté inférieur tandis que son côté supérieur supporte les trains de galets (17, 18).

3. Vérin suivant l'une des revendications 1 et 2, caractérisé en ce que le ressort (20) est maintenu en place par une patte (21) constituée par un crevé d'une coquille (2) constituant, avec une coquille (3), la cage (1) délimitant la chambre (4).

4. Vérin suivant l'une des revendications 1 à 3, caractérisé en ce que la came (8) est commandée en rotation par un levier (14) qui est monté solidaire de cette came (8) autour d'un prolongement (12) de la came formant axe de rotation.

5. Vérin suivant l'une des revendications 1 à 4, caractérisé en ce que les parties en V contenant les trains de galets des pièces (15, 16) présentent un angle au sommet dont la valeur est supérieure à l'angle au sommet des rampes d'appui (15a, 16a) desdites pièces (15, 16) coutre les parois internes de la cage (1).

6. Vérin suivant l'une des revendications 1 à 5, caractérisé en ce que la position des trains de galets (17, 18) est telle que, par action volontaire sur le levier de came (14) ou par inertie, ces galets peuvent monter sur les rampes intérieures de V des pièces (15, 16) pour bloquer la cage (1) sur la tige (23) afin d'éviter tout déplacement intempestif des deux pièces l'une par rapport à l'autre.

**Patentansprüche**

1. Geradlinige Winde mit Sperrung durch Rollen (17, 18) in beliebigen Stellungen, bestehend aus einem Käfig (1), der in seinem oberen Abschnitt eine Innenkammer (4) begrenzt, wogegen sein unterer Abschnitt von geringerer Dicke ist, um einen Endflansch (6) zu bilden, welcher von einem die Befestigung des Käfigs (1) ermöglichenden Loch (7) durchsetzt ist, dadurch gekennzeichnet, daß der Käfig (1) in seinem oberen Abschnitt von ungefährer Rautenform ist, die eine Kurvenscheibe (8) mit zwei ungefähr um 120° gegeneinander versetzt angeordneten Nasen (9) einschließt, wobei diese Kurvenscheibe eine Verlagerung von zwei kappenförmigen Bauteilen (15, 16) ermöglicht, die sich auf ihrer den Nasen (9) der Kurvenscheibe (8) abgewandten Seite an den schrägen Innenwänden der Raute der Kammer (4) abstützen, wogegen ihr V-förmiger unterer Abschnitt durch eine Feder (20) in Anlage an den Bauteilen (15, 16) gehaltene Rollensätze (17, 18) enthält, die auf dem oberen Abschnitt einer Windenstange (23) aufruhen, welche wenigstens einen Anschlußkopf (25) aufweist.

2. Winde nach Anspruch 1, dadurch gekennzeichnet, daß die Windenstange (23) von quadratischem Querschnitt ist und im unteren Abschnitt der Kammer (4) mit ihrer Unterseite aufruht, wogegen ihre Oberseite die Rollensätze (17, 18) trägt.

3. Winde nach einem der Ansprüche 1 und 2, dadurch gekennzeichnet, daß die Feder (20) von einem Lappen (21) in Stellung gehalten ist, der von einem Ausschnitt einer Schale (2) gebildet ist, welche mit einer Schale (3) den die Kammer (4) begrenzenden Käfig (1) bildet.

4. Winde nach einem der Ansprüche 1 bis 3, dadurch gekennzeichnet, daß die Kurvenscheibe (8) durch einen Hebel (14) drehbar ist, der mit dieser Kurvenscheibe (8) um eine Drehachse bildendes Verlängerungsstück (12) der Kurvenscheibe fest verbunden ist.

5. Winde nach einem der Ansprüche 1 bis 4, dadurch gekennzeichnet, daß die die Rollensätze enthaltenden V-förmigen Abschnitte der Bauteile (15, 16) einen Scheitelwinkel aufweisen, dessen Betrag größer ist als der Scheitelwinkel der Anlagerampen (15a, 16a) der genannten Bauteile (15, 16) an den Innenwänden des Käfigs (1).

6. Winde nach einem der Ansprüche 1 bis 5, dadurch gekennzeichnet, daß die Stellung der Rollensätze (17, 18) so ist, daß durch gewollte Einwirkung auf den Kurvenscheibenhebel (14) oder durch Trägheit diese Rollen die Innenrampen vom V der Bauteile (15, 16) hinauflaufen können, um den Käfig (1) auf der Stange (23) zu blockieren, damit jegliche unbeabsichtigte gegenseitige Verlagerung der beiden Bauteile vermieden wird.

**Claims**

1. Rectilinear jack which can be blocked by rollers (17, 18) in an indifferent position, comprising a cage (1) defining at its upper portion an inner chamber (4) while its lower portion is made thinner in order to form an end lug (6) pierced with a hole (7) for fixation of the cage (1), characterized in that the cage (1) has, at its upper portion, a substantially lozenge shape enclosing a cam (8) having two noses (9) placed substantially at 120° with respect to each other, this cam enabling to displace two so-called gendarme's hat shaped parts (15, 16) bearing, on their side opposite the two noses (9) of the cam (8), on the inclined inner walls of the lozenge of the chamber (4) while their V-shaped lower portion contains trains of rollers (17, 18) kept in engagement with the parts (15, 16) by a spring (20), the trains of rollers (17, 18) bearing on the upper portion of a jack stem (23) having at least one connection head (25).

2. Jack according to claim 1, characterized in that the jack stem (23) is of square shaped section and bears in the lower portion of the chamber (4) via its lower side while its upper side supports the trains of rollers (17, 18)

3. Jack according to one of claims 1 and 2, characterized in that the spring (20) is maintained in position by a lug (21) formed by a cut-out portion of a shell (2) forming, with a shell (3), the cage (1) defining the chamber (4).

4. Jack according to one of claims 1 to 3, characterized in that the cam (8) is rotatably controlled by a lever (14) which is rigidly connected to thus cam (8) about an extension (12) of the cam forming an axis of rotation.

5. Jack according to one of claims 1 to 4, characterized in that the V-shaped portions containing the trains of rollers of the parts (15, 16) have an ipex angle the value of which is upper than the apex angle of the bearing ramps (15a, 16a) of said parts (15, 16) against the inner walls of the cage (1).

6. Jack according to one of claims 1 to 5, characterized in that the position of the trains of rollers (17, 18) is such that, by a voluntary action on the cam lever (14) or by inertia these rollers can climb on the V-shaped inner ramps of the parts (15, 16) for blocking the cage (1) on the stem (23) in order to avoid any untimely relative displacement of the two parts.

*Fig.2*

*Fig.1*

*Fig.3*

F1

0 234 160

*Fig. 4*